# EUROPÄISCHE PATENTSCHRIFT

(11) **EP 3 442 848 B1**
(45) Veröffentlichungstag und Bekanntmachung des Hinweises auf die Patenterteilung: **31.03.2021**
(21) Anmeldenummer: 17723978.7
(22) Anmeldetag: 11.05.2017
(51) Int. Cl.: B61K 9/04, B61H 1/00

(54) **FAHRWERK FÜR EIN SCHIENENFAHRZEUG**
RUNNING GEAR FOR A RAIL VEHICLE
CHÂSSIS CONÇU POUR UN VÉHICULE FERROVIAIRE

(30) Priorität: 16.06.2016 DE 102016210719
(43) Veröffentlichungstag der Anmeldung: 20.02.2019
(73) Patentinhaber: Siemens Mobility GmbH, 81739 München (DE)
(72) Erfinder: WENNEKAMP, Fabian, 45131 Essen (DE)
(86) Internationale Anmeldenummer: PCT/EP2017/061351
(87) Internationale Veröffentlichungsnummer: WO 2017/215852

(56) Entgegenhaltungen:
- EP-A1- 0 351 657
- EP-A1- 0 391 047
- CN-A- 103 528 834
- JP-A- S63 247 628
- US-A1- 2009 255 329

## Beschreibung

Die Erfindung bezieht sich auf ein Schienenfahrzeug für Hochgeschwindigkeitsverkehr, das ein Fahrwerk mit einem Fahrwerkrahmen, an dem wenigstens ein Satz Vollräder gelagert ist, und mit einer Bremsvorrichtung zum Abbremsen des Fahrwerks aufweist.

Zum Abbremsen von Fahrwerken von Hochgeschwindigkeits-Schienenfahrzeugen sind beispielsweise lineare Wirbelstrombremsen (ICE3, DB-Baureihe 407) oder auch Radscheibenbremsen (Velaro-E, RENFE-Baureihe 103) bekannt. Diese Varianten von Bremsvorrichtungen haben neben einem hohen Gewicht auch einen erheblichen Platzbedarf.

Letztere Problematik verschärft sich noch bei Fahrwerken, bei denen die Vollräder der Radsätze auf Außenseiten des Fahrwerkrahmens liegen, d.h. die Fahrwerke innengelagert sind. Bei solchen Fahrwerken ist der zur Verfügung stehende Bauraum wesentlich geringer als bei außengelagerten Fahrwerken.

Aus der JP S63 247628 A ist ein Fahrwerk für ein Schienenfahrzeug bekannt, bei dem eine Klotzbremse und eine berührungslose Temperaturüberwachung zum Einsatz kommt. Zielsetzung ist es festzustellen, ob die Klotzbremse ausreichend Kontakt zum abzubremsenden Rad hat. Dies wird über einen auftretenden Temperaturanstieg überwacht.

Ausgehend hiervon liegt der Erfindung die Aufgabe zugrunde, ein Schienenfahrzeug für Hochgeschwindigkeitsverkehr anzugeben, bei dem die Bremsvorrichtung platzsparend ausgeführt und insbesondere auch für innengelagerte Fahrwerke einsetzbar ist.

Diese Aufgabe wird bei dem eingangs genannten Schnienenfahrzeug durch die Merkmale des Anspruchs 1 gelöst. Danach zeichnet sich das Schnienenfahrzeug dadurch aus, dass die Bremsvorrichtung als Klotzbremse ausgeführt ist, die mit wenigstens einem Vollrad zusammenwirkt, und dem Vollrad benachbart eine kontaktlos arbeitende Temperaturmessvorrichtung vorgesehen ist, welche eine Temperatur des Vollrades in einem Radbereich überwacht, der für einen Energieeintrag durch die Klotzbremse in das Vollrad repräsentativ ist, das Fahrwerk mit einer Auswerteeinrichtung in einer Signalverbindung steht, welche von den vorgesehenen, kontaktlos arbeitenden Temperaturmesseinrichtungen kommende Messwert-Signale auswertet und daraus für das Vollrad einen Energieeintragswert aufgrund eines Bremsvorgangs bestimmt und
für das Vollrad entweder ein maximaler kumulierter Gesamt-Energieeintragswert oder ein maximaler Gesamt-Energieeintragswert für einen einzelnen Bremsvorgang festgelegt ist, bei dessen jeweiligem Überschreiten die Auswerteeinrichtung ein Auslösesignal für eine Fahrzeugreaktion/Wartungsmaßnahme erzeugt.

Die Auswahl einer Klotzbremse als Bremsvorrichtung gewährleistet einen geringen Platzbedarf. Der Einsatz von im niedrigen Geschwindigkeitsbereich bereits bekannten Klotzbremsen im Hochgeschwindigkeitsverkehr wird dadurch ermöglicht, dass ein Energieeintrag in gebremste Vollräder überwacht wird. Zu diesem Zweck dient die wenigstens eine kontaktlos arbeitende Temperaturmessvorrichtung. In dieser Weise wird die Klotzbremse dem Einsatz bei Hochgeschwindigkeits-Schienenfahrzeugen zugänglich gemacht.

Die Temperaturmessvorrichtung kann von einem Pyrometer gebildet sein. Dadurch ergibt sich eine einfache Realisierung für die kontaktlose Temperaturmessung.

Bevorzugt wird für den für einen Energieeintrag in das Vollrad repräsentativen Radbereich des Vollrades dessen Kranz und/oder Steg gewählt. Eine besonders zuverlässige Überwachung des Energieeintrags in das Vollrad ist dann gewährleistet, wenn sowohl der Spurkranz als auch der Radsteg jeweils mit Hilfe eines Pyrometers hinsichtlich ihrer Temperatur überwacht werden.

Sämtliche vorgesehenen, kontaktlos arbeitenden Temperaturmessvorrichtungen, beispielsweise diejenigen für den Spurkranz und den Radsteg, können an dem Fahrwerkrahmen angebracht oder in diesen integriert sein.

Das Fahrwerk steht mit einer Auswerteeinrichtung in einer Signalverbindung, welche von den vorgesehenen, kontaktlos arbeitenden Temperaturmesseinrichtungen kommende Messwert-Signale auswertet und daraus für das Vollrad einen Energieeintragswert aufgrund eines Bremsvorgangs bestimmt. In dieser Weise wird ein Energieeintragswert ermittelt, der einem Schadensäquivalent für das Vollrad entspricht. Selbstverständlich kann für sämtliche Vollräder des Fahrwerks dieselbe Überwachung mittels kontaktlos arbeitender Temperaturmessvorrichtungen vorgesehen sein. In diesem Fall ist die Auswerteeinrichtung beispielsweise mit jeweils zwei kontaktlos arbeitenden Temperaturmessvorrichtungen für jedes Vollrad signaltechnisch verbunden.

Die Auswerteeinrichtung kann Energieeintragswerte aufeinander folgender Bremsvorgänge kumulieren und ein Gesamt-Energieeintragswert für das Vollrad bestimmen.

Zu diesem Zweck ist es vorteilhaft, wenn die Auswerteeinrichtung für jeden Bremsvorgang einen Temperaturverlauf erfasst. Aus diesem Temperaturverlauf lässt sich dann beispielsweise für eine Mehrzahl von aneinander anschließenden Temperaturintervallen jeweils eine Verweildauer in dem betreffenden Temperaturintervall ermitteln. Dabei kann angenommen werden, dass ein Energieeintrag in das Vollrad etwa linear mit der Verweildauer in einem betreffenden Temperaturintervall zusammenhängt.

Jedem der Mehrzahl an Temperaturintervallen kann ein Energieeintragswert pro Sekunde zugeordnet sein, so dass für jedes der Temperaturintervalle aufgrund einer Verweildauer und des zugeordneten Energieeintragswerts pro Sekunde ein auf das Temperaturintervall bezogener Energieeintragswert berechenbar ist. Dabei wird der Energieeintargswert pro Sekunde von niedriger zu höher liegenden Temperaturintervallen zunehmen.

Für das Vollrad ist ein maximaler kumulierter Gesamt-Energieeintragswert festgelegt, bei dessen Überschreiten die Auswerteeinrichtung ein Auslösesignal für eine Fahrzeugreaktion/Wartungsmaßnahme erzeugt. Eine Fahrzeugreaktion kann beispielsweise darin bestehen, eine Betriebsgeschwindigkeit des Schienenfahrzeugs herabzusetzen. Auch kann angezeigt werden, dass aufgrund des Gesamt-Energieeintrags eine Wartungsmaßnahme erforderlich erscheint. Vorteilhafterweise kann für das Vollrad auch ein maximaler Gesamt-Energieeintragswert für einen einzelnen Bremsvorgang festgelegt sein, bei dessen Überschreiten die Auswerteeinrichtung ein Auslösesignal für eine Fahrzeugreaktion/Wartungsmaßnahme erzeugt. Bei dieser Ausführungsform werden kritische Temperaturen überwacht, die bei einmaliger Überschreitung eine Fahrzeugreaktion auslösen müssen.

Die Auswerteeinrichtung kann als Komponente des Fahrwerks ausgebildet und von einem Bremssteuersystem des Schienenfahrzeugs getrennt ausgeführt sein. Dabei ist es möglich, dass die Auswerteeinrichtung auf den Fahrwerkrahmen aufgesetzt oder in diesen integriert ist. Die gewählte Konstruktion kann strömungstechnisch derart optimiert sein, dass eine Schmutzanlagerung wirksam vermieden ist.

Die Ausführung der Auswerteeinrichtung getrennt von einem Bremssteuersystem des Schienenfahrzeugs hat den Vorteil, dass der Energieeintrag in das Vollrad auch für sicherheitsrelevante Anwendungen bestimmbar ist.

Ein Ausführungsbeispiel der Erfindung wird nachfolgend unter Bezugnahme auf die Zeichnung noch näher erläutert. Es zeigen:
- Figur 1: eine schematische Ansicht von oben auf ein innengelagertes Fahrwerk und
- Figur 2: eine grafische Darstellung eines Temperaturverlaufs an einem Vollrad.

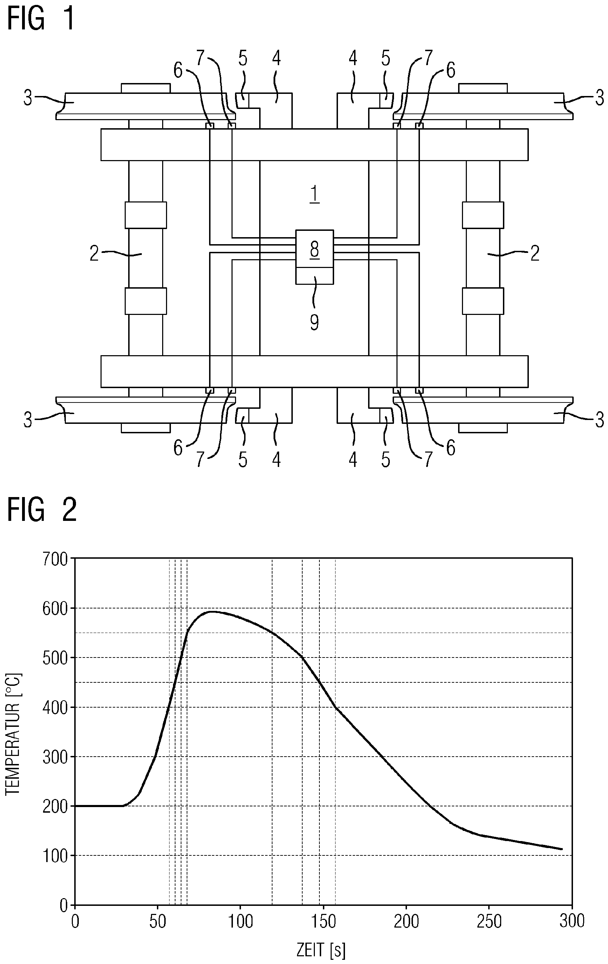

Wie aus Figur 1 hervorgeht, ist ein innengelagertes Fahrwerk mit zwei Radsätzen ausgestattet. Beide Radsätze umfassen seitlich außerhalb eines Fahrwerkrahmens 1 jeweils auf einer Welle 2 angeordnete Vollräder 3.

Das Fahrwerk ist mit einer Bremsvorrichtung ausgestattet, die als Klotzbremse ausgeführt ist. Insofern weist die Bremsvorrichtung für jedes der Vollräder 3 einen Bremshebel 4 auf, der im Bremsfall betätigt wird. Die Bremshebel 4 stehen seitlich von dem Fahrwerkrahmen 1 vor und sind paarweise zentral zwischen an einer Seite des Fahrwerks hintereinander liegenden Vollrädern 3 angeordnet. Jeder Bremshebel 4 ist auf seiner einem Vollrad 3 zugeordneten Seite mit einem Bremsklotz 5 ausgestattet, der bei Betätigung des zugehörigen Bremshebels 4 mit einer Lauffläche des zugeordneten Vollrades 3 für Bremszwecke zur Anlage gelangt.

Jedem der Vollräder 3 sind im vorliegenden Ausführungsbeispiel zwei Pyrometer zugeordnet, welche während eines Bremsvorgangs Temperaturen des Vollrades kontaktlos erfassen. Ein erstes Pyrometer 6 ist seitlich an dem Fahrwerkrahmen 1 einem Steg des zugeordneten Vollrades 3 benachbart angeordnet und erfasst aus diesem Bereich die Temperatur des Vollrades 3. Ein zweites Pyrometer 7 ist einem Spurkranz des zugeordneten Vollrades 3 benachbart angeordnet und erfasst dort die Temperatur. Bezogen auf das betreffende Vollrad 3, liegt somit das erste Pyrometer 6 weiter innen als das zweite Pyrometer 7. Es ist hervorzuheben, dass die Ausführung der Temperaturmessvorrichtung als Pyrometer nur beispielshalber ist. Wesentlich ist lediglich, dass eine kontaktlose Temperaturmessung für relevante Bereiche des betreffenden Vollrades 3 ermöglicht wird.

Da das beispielhaft beschriebene Fahrwerk insgesamt 4 Vollräder 3 aufweist, ist das Fahrwerk 1 mit insgesamt acht als Pyrometer ausgeführten Temperatursensoren ausgestattet, die sämtlich in einer jeweiligen Signalverbindung mit einer Auswerteeinrichtung 8 stehen. Die Auswerteeinrichtung 8 kann beispielsweise im Bereich eines Traversenabschnitts des Fahrwerks 1 in einem Abstand zu etwaig vorgesehener Federung angeordnet sein. Die Pyrometer 6, 7 können in den Fahrwerksrahmen 1 integriert oder auf diesen aufgesetzt sein.

Die Auswerteeinrichtung 8 verfügt über eine Schnittstelle 9, über die beispielsweise auch drahtlos Steuersignale an eine Fahrzeugsteuerung eines Schienenfahrzeugs gesendet werden, zu der das betrachtete Fahrwerk gehört.

Es ist hervorzuheben, dass zur Überwachung einer Temperatur eines der Vollräder 3 auch lediglich ein Pyrometer 6, 7 ausreichen kann, um einen Energieeintrag in das Vollrad 3 aufgrund von Bremsvorgängen zu bestimmen.

Figur 2 zeigt einen von einem der Pyrometer 6, 7 gelieferten Temperaturverlauf für einen einzelnen Bremsvorgang eines der Vollräder 3 als Funktion der Zeit.

Von wesentlicher Bedeutung ist dabei, über welche jeweilige Verweildauer sich der temperaturmäßig überwachte Bereich des Vollrades 3, beispielsweise Spurkranz oder Radsteg, in einem bestimmten Temperaturintervall befindet. Im dargestellten Beispiel reicht der für einen Energieeintrag in die Vollräder 3 interessierende Temperaturbereich von 400 bis 600°C und ist in Temperaturintervalle von jeweils 50°C unterteilt.

Es ist ersichtlich, dass mit Aufnahme des Bremsvorgangs die Temperatur des Vollrades 3 zunächst steil ansteigt, wonach ein zunächst flacher, dann steilerer Temperaturabfall folgt. Der Temperaturverlauf der Figur 2 ist in der nachstehenden Tabelle mehr im Detail wiedergegeben:

| Vor-Gesamtenergieeintragswert: | | | | 40 |
|---|---|---|---|---|
| | | | | |

| Temperaturintervall | Dauer (aufgerundet) | Energieeintragswert /Sekunde | Energieeintragswert | |
|---|---|---|---|---|
| 400° - 450° | 4,0 | 2,0 | 0,1 | |
| 450° - 500° | 4,0 | 3,0 | 0,1 | |
| 500° - 550° | 5,0 | 6,0 | 0,3 | |
| 550° - 600° | 52,0 | 15,0 | 7,8 | |
| 500° - 550° | 19,0 | 6,0 | 1,1 | |
| 450° - 500° | 11,0 | 3,0 | 0,3 | |
| 400° - 450° | 10,0 | 2,0 | 0,2 | |
| Gesamt-Energieeintragswert letzte Bremsung | | | 10,0 | 10 |
| | | | | |
| Neuer Gesamt-Energieeintragswert: | | | | 50 |
| Grenzwert: | | | | 100 |

Vorstehende Tabelle veranschaulicht einen einzelnen Bremsvorgang, bei dem ein Vorschaden/bisheriger Gesamt-Energieeintragswert von 40 vorliegt. Für die einzelnen Temperaturintervalle sind jeweils die Verweildauer und der für das betreffende Temperaturintervall einschlägige Energieeintragswert pro Sekunde angegeben. Das Produkt aus Verweildauer und Energieeintragswert pro Sekunde ergibt für jedes Temperaturintervall einen Energieeintragswert, der äquivalent zu einem Schaden aufgrund des Energieeintrags bei dem betreffenden Vollrad 3 ist. Eine Kumulation aller Energieeintragswerte über die Temperaturintervalle ergibt den der einzelnen Bremsung zugeordneten Gesamt-Energieeintrag. Dessen Addition mit dem Vor-Energieeintragswert (Vorschaden) ergibt den neuen Gesamt-Energieeintragswert.

Die Auswerteeinrichtung 8 generiert im vorliegenden Ausführungsbeispiel aus den von den Pyrometern 6, 7 insgesamt acht gelieferten Temperaturverläufen jeweils Gesamt-Energieeintragswerte für jedes der Vollräder 3. Etwaige Fahrzeugreaktionen werden über die Schnittstelle 9 ausgelöst. Dem Auslösesignal liegt eine Auswertung für sämtliche Vollräder 3 zugrunde, wobei zusätzlich weitere Parameter herangezogen werden können.

Die vorbeschriebe Kombination aus Sensorik (Pyrometer 6, 7) und zugehöriger Auswerteeinrichtung 8 arbeitet getrennt von der Bremssteuerung des Schienenfahrzeugs.

Es ist darauf hinzuweisen, dass in einem alternativen, nicht dargestellten Ausführungsbeispiel die Auswerteeinrichtung 8 auch von dem Fahrwerk entfernt, beispielsweise im Wagenkasten des Schienenfahrzeugs untergebracht sein kann. In diesem Fall werden die Pyrometer 6,7 in einer beispielsweise auch drahtlosen Signalverbindung mit der Auswerteeinrichtung 8 stehen.

Für die Auswerteeinrichtung 8 ist zudem ein Gesamt-Energieeintragswert vorgegeben, und zwar für eine Kumulation aufeinanderfolgender Bremsvorgänge. Wenn hier ein vorgegebener Maximalwert erreicht ist, erfolgt eine entsprechende Signalisierung und Weiterverarbeitung durch die Fahrzeugsteuerung des Schienenfahrzeugs. Auch kann die Notwendigkeit einer baldigen Wartungsmaßnahme signalisiert werden.

Parallel zum Vorsehen eines Gesamt-Energieeintrags aufgrund kumulierter Energieeintragswerte für aufeinander folgende Bremsvorgänge kann auch ein maximaler Energieeintragswert für einen einzelnen Bremsvorgang festgelegt sein. Wird dieser überschritten, erzeugt die Auswerteeinrichtung 8 wiederum Auslösesignale für die Fahrzeugsteuerung/Wartungsmaßnahmen, und zwar über die vorgesehene Schnittstelle 9. Die beiden angesprochenen maximalen Energieeintragswerte sind in Abhängigkeit vom Material des Vollrades 3 und der vorgesehenen Bremsbeläge 5 zu bestimmen.

## Patentansprüche

1. Schienenfahrzeug für Hochgeschwindigkeitsverkehr, das ein Fahrwerk mit einem Fahrwerkrahmen (1), an dem wenigstens ein Satz Vollräder (3) gelagert ist, und mit einer Bremsvorrichtung zum Abbremsen des Fahrwerks aufweist, wobei die Bremsvorrichtung als Klotzbremse (5) ausgeführt ist, die mit wenigstens einem Vollrad (3) zusammenwirkt, und dem Vollrad (3) benachbart eine kontaktlos arbeitende Temperaturmessvorrichtung vorgesehen ist, welche eine Temperatur des Vollrades (3) in einem Radbereich überwacht, der für einen Energieeintrag durch die Klotzbremse (5) in das Vollrad repräsentativ ist **dadurch gekennzeichnet, dass** das Fahrwerk (1) mit einer Auswerteeinrichtung (8) in einer Signalverbindung steht, welche von den vorgesehenen, kontaktlos arbeitenden Temperaturmesseinrichtungen kommende Messwert-Signale auswertet und daraus für das Vollrad (3) einen Energieeintragswert aufgrund eines Bremsvorgangs bestimmt und für das Vollrad (3) ein maximaler kumulierter Gesamt-Energieeintragswert festgelegt ist, bei dessen Überschreiten die Auswerteeinrichtung ein Auslösesignal für eine Fahrzeugreaktion/Wartungsmaßnahme erzeugt.

2. Schienenfahrzeug nach Anspruch 1,
**dadurch gekennzeichnet, dass**
die Temperaturmessvorrichtung von einem Pyrometer (6, 7) gebildet ist.

3. Schienenfahrzeug nach einem der Ansprüche 1 oder 2,
**dadurch gekennzeichnet, dass**
der für einen Energieeintrag in das Vollrad (3) repräsentative Radbereich des Vollrades (3) dessen Kranz und/oder Steg ist.

4. Schienenfahrzeug nach einem der Ansprüche 1 bis 3,
**dadurch gekennzeichnet, dass**
sämtliche vorgesehenen, kontaktlos arbeitenden Temperaturmessvorrichtungen an dem Fahrwerkrahmen (1) angebracht sind.

5. Schienenfahrzeug nach einem der Ansprüche 1 bis 4,
**dadurch gekennzeichnet, dass**
die Auswerteeinrichtung (8) Energieeintragswerte aufeinander folgender Bremsvorgänge kumuliert und einen Gesamt-Energieeintragswert für das Vollrad (3) bestimmt.

6. Schienenfahrzeug nach einem der Ansprüche 1 bis 5,
**dadurch gekennzeichnet, dass**
die Auswerteeinrichtung (8) für jeden Bremsvorgang wenigstens einen Temperaturverlauf erfasst.

7. Schienenfahrzeug nach Anspruch 6,
**dadurch gekennzeichnet, dass**
die Auswerteeinrichtung aus dem erfassten Temperaturverlauf für eine Mehrzahl von aneinander anschließenden Temperaturintervallen jeweils eine Verweildauer in dem betreffenden Temperaturintervall erfasst.

8. Schienenfahrzeug nach Anspruch 7,
**dadurch gekennzeichnet, dass**
jedem der Mehrzahl an Temperaturintervallen ein Energieeintragswert pro Sekunde zugeordnet ist, so dass für jedes der Temperaturintervalle aufgrund einer Verweildauer und des zugeordneten Energieeintragswerts pro Sekunde ein auf das Temperaturintervall bezogener Energieeintragswert berechenbar ist.

9. Fahrwerk nach einem der Ansprüche 1 bis 8,
**dadurch gekennzeichnet, dass**
für das Vollrad (3) ein maximaler Gesamt-Energieeintragswert für einen einzelnen Bremsvorgang festgelegt ist, bei dessen Überschreiten die Auswerteeinrichtung ein Auslösesignal für eine Fahrzeugreaktion/Wartungsmaßnahme erzeugt.

10. Schienenfahrzeug nach einem der Ansprüche 1 bis 9,
**dadurch gekennzeichnet, dass**
die Auswerteeinrichtung (8) als Komponente des Fahrwerks (1) ausgebildet und von einem Bremssteuersystem des Schienenfahrzeugs getrennt ausgeführt ist.

11. Schienenfahrzeug nach einem der Ansprüche 1 bis 9, bei dem die Auswerteeinrichtung (8) von dem Fahrwerk (1) entfernt auf Seiten eines Wagenkastens des Schienenfahrzeugs untergebracht ist.

## Claims

1. Rail vehicle for high-speed transportation, which has a bogie with bogie frame (1) on which at least one set of monobloc wheels (3) is mounted, and with a brake device for braking the bogie,
wherein
the brake device is embodied as a block brake (5) which interacts with at least one monobloc wheel (3), and a temperature measuring device which operates in a contactless fashion is provided adjacent to the monobloc wheel (3), said temperature measuring device monitoring a temperature of the monobloc wheel (3) in a wheel area, which is representative of an input of energy into the monobloc wheel by the block brake (5),
**characterized in that**
the bogie (1) has a signal-transmitting connection to an evaluation device (8) which evaluates measurement value signals coming from the temperature measuring devices which are provided and which operate in a contactless fashion, and determines therefrom an energy input value for the monobloc wheel (3) on the basis of a braking process, and a maximum accumulated overall energy input value is defined for the monobloc wheel (3), at the exceeding of which value the evaluation unit generates a triggering signal for a vehicle reaction/maintenance measure.

2. Rail vehicle according to Claim 1,
**characterized in that**
the temperature measuring device is formed by a pyrometer (6, 7) .

3. Rail vehicle according to one of Claims 1 and 2,
**characterized in that**
the wheel area of the monobloc wheel (3) which is representative of an input of energy into the monobloc wheel (3) is the rim and/or web of said wheel.

4. Rail vehicle according to one of Claims 1 to 3,
**characterized in that**
all the temperature measuring devices which are provided and which operate in a contactless fashion are mounted on the bogie frame (1).

5. Rail vehicle according to one of Claims 1 to 4,
**characterized in that**
the evaluation device (8) accumulates energy input values of successive braking processes and determines an overall energy input value for the monobloc wheel (3).

6. Rail vehicle according to one of Claims 1 to 5,
**characterized in that**
the evaluation device (8) acquires at least one temperature progression for each braking process.

7. Rail vehicle according to Claim 6,
**characterized in that**
the evaluation device acquires a dwell time in the respective temperature interval for each of a multiplicity of successive temperature intervals from the acquired temperature progression.

8. Rail vehicle according to Claim 7,
**characterized in that**
each of the multiplicity of temperature intervals is assigned an energy input value per second, so that an energy input value which is related to the temperature interval can be calculated for each of the temperature intervals on the basis of a dwell time and the assigned energy input value per second.

9. Bogie according to one of Claims 1 to 8,
**characterized in that**
a maximum overall energy input value is defined for a single braking process for the monobloc wheel (3), at the exceeding of which value the evaluation device generates a triggering signal for a vehicle reaction/maintenance measure.

10. Rail vehicle according to one of Claims 1 to 9,
**characterized in that**
the evaluation device (8) is embodied as a component of the bogie (1) and is constructed so as to be separate from a brake control system of the rail vehicle.

11. Rail vehicle according to one of Claims 1 to 9, in which the evaluation device (8) is accommodated at a distance from the bogie (1), at the wagon body end of the rail vehicle.

## Revendications

1. Véhicule ferroviaire pour la circulation à grande vitesse, qui a un train de roulement ayant un châssis (1) de train de roulement, sur lequel est monté au moins un jeu de roues (3) en une seule pièce et comprenant un système de freinage pour freiner le train de roulement,
dans lequel
le système de freinage est réalisé sous la forme d'un frein (5) à sabot, qui coopère avec au moins une roue (3) en une seule pièce et il est prévu au voisinage de la roue (3) en une seule pièce un système de mesure de la température fonctionnant sans contact, qui contrôle une température de la roue (3) en une seule pièce dans une partie de la roue qui est représentative d'un apport d'énergie par le frein (5) à sabot à la roue en une seule pièce, **caractérisé en ce que**
le train de roulement (1) est en liaison de signal avec un dispositif (8) d'exploitation, qui exploite des signaux de valeur de mesure venant des dispositifs de mesure de température prévus fonctionnant sans contact et on détermine pour la roue (3) en une seule pièce une valeur d'apport d'énergie en raison d'une opération de freinage et fixe pour la roue (3) en une seule pièce une valeur d'apport d'énergie totale maximum cumulée, au dépassement de laquelle le dispositif d'exploitation produit un signal de déclenchement pour une mesure de réaction / d'entretien du véhicule.

2. Véhicule ferroviaire suivant la revendication 1,
**caractérisé en ce que**
le système de mesure de la température est formé d'un pyromètre (6, 7).

3. Véhicule ferroviaire suivant l'une des revendications 1 ou 2,
**caractérisé en ce que**
la partie de la roue (3) en une seule pièce représentative pour l'apport d'énergie est sa jante et/ou son âme.

4. Véhicule ferroviaire suivant l'une des revendications 1 à 3,
**caractérisé en ce que**
des systèmes de mesure de température fonctionnant sans contact prévus dans l'ensemble sont montés sur le châssis (1) du train de roulement.

5. Véhicule ferroviaire suivant l'une des revendications 1 à 4,
**caractérisé en ce que**
le dispositif (8) d'exploitation cumule des valeurs d'apport d'énergie d'opérations de freinage successives et détermine une valeur d'apport d'énergie totale pour la roue (3) en une seule pièce.

6. Véhicule ferroviaire suivant l'une des revendication 1 à 5,
**caractérisé en ce que**
le dispositif (8) d'exploitation relève au moins une courbe de température pour chaque opération de freinage.

7. Véhicule ferroviaire suivant la revendication 6,
**caractérisé en ce que**
le dispositif d'exploitation relève, à partir de la courbe de température relevée pour une pluralité d'intervalles de température se raccordant les uns ou autres, respectivement une durée de séjour dans l'intervalle de température concerné.

8. Véhicule ferroviaire suivant la revendication 7,
**caractérisé en ce que**
à chacun de la pluralité d'intervalles de température est associée une valeur d'apport d'énergie par seconde de manière à pouvoir calculer, pour chacun des intervalles de température sur la base d'une durée de séjour et de la valeur d'apport d'énergie associée par seconde, une valeur d'apport d'énergie rapportée à l'intervalle de température.

9. Frein de roulement suivant l'une des revendications 1 à 8,
**caractérisé en ce que**,
pour la roue (3) en une seule pièce, une valeur d'apport d'énergie totale maximum pour une opération de freinage individuelle est fixée, et, lorsqu'elle est dépassée, le dispositif d'exploitation produit un signal de déclenchement d'une mesure de réaction /d' entretien du véhicule.

10. Frein de roulement suivant l'une des revendications 1 à 9,
**caractérisé en ce que**,
le dispositif (8) d'exploitation est constitué en élément du train (1) de roulement et est réalisé séparément d'un système de commande de frein du véhicule ferroviaire.

11. Véhicule ferroviaire suivant l'une des revendications 1 à 9, dans lequel le dispositif (8) d'exploitation est logé loin du train (1) de roulement du côté d'une caisse du véhicule ferroviaire.
